# FASCICULE DE BREVET EUROPEEN

(11) **EP 4 407 301 B1**
(45) Date de publication et mention de la délivrance du brevet: **03.06.2026**
(21) Numéro de dépôt: 24154817.1
(22) Date de dépôt: 30.01.2024
(51) Int. Cl.: G01N 21/3554, G01N 21/3563, G01N 21/84

(54) **PROCEDE DE DETERMINATION D'UNE EVOLUTION D'HUMECTATION FOLIAIRE**
VERFAHREN ZUR BESTIMMUNG DER ENTWICKLUNG VON BLATTGREGATION
METHOD FOR DETERMINING A FOLIAR HUMIDITY EVOLUTION

(30) Priorité: 30.01.2023 FR 2300843
(43) Date de publication de la demande: 31.07.2024
(73) Titulaire: Feugier, François, Gabriel, 75004 Paris (FR); Plonquet, Jean-Pierre, 75004 Paris (FR); GREEN SHIELD TECHNOLOGY, 69393 Lyon Cedex 03 (FR); Centre National de la Recherche Scientifique (CNRS), 75016 Paris (FR); Université Claude Bernard Lyon 1, 69100 Villeurbanne (FR); Ecole Centrale de Lyon, 69130 Ecully (FR); Ecole Superieure de Chimie Physique Electronique de Lyon, 69100 Villeurbanne (FR); Institut National des Sciences Appliquées de Lyon (Insa Lyon), 69100 Villeurbanne (FR)
(72) Inventeur: FEUGIER, François, Gabriel, 75004 PARIS (FR); PLONQUET, Jean-Pierre, 75004 PARIS (FR); GAETANI, Robin, 75004 PARIS (FR); MASENELLI, Bruno, 75004 PARIS (FR)
(74) Mandataire: Regimbeau

(56) Documents cités:
- PATEL ARTH ET AL: "Strawberry plant wetness detection using computer vision and deep learning", SMART AGRICULTURAL TECHNOLOGY, vol. 1, December 2021 (2021-12-01), pages 100013, XP093068570, ISSN: 2772-3755, DOI: 10.1016/j.atech.2021.100013
- HEUSINKVELD ET AL: "A new remote optical wetness sensor and its applications", AGRICULTURAL AND FOREST METEOROLOGY, ELSEVIER, AMSTERDAM, NL, vol. 148, no. 4, 9 January 2008 (2008-01-09), pages 580 - 591, XP022559867, ISSN: 0168-1923
- LIANG YUPENG ET AL: "Multimodal Material Segmentation", 2022 IEEE/CVF CONFERENCE ON COMPUTER VISION AND PATTERN RECOGNITION (CVPR), IEEE, 18 June 2022 (2022-06-18), pages 19768 - 19776, XP034193691, DOI: 10.1109/CVPR52688.2022.01918
- YA-QIU JIN ED - STEIN T I: "Monitoring crop growth on China Plains by using SSM/I data", GEOSCIENCE AND REMOTE SENSING, 1997. IGARSS '97. REMOTE SENSING - A SC IENTIFIC VISION FOR SUSTAINABLE DEVELOPMENT., 1997 IEEE INTERNATIONAL SINGAPORE 3-8 AUG. 1997, NEW YORK, NY, USA,IEEE, US, vol. 4, 3 August 1997 (1997-08-03), pages 2050 - 2052, XP010234667, ISBN: 978-0-7803-3836-4, DOI: 10.1109/IGARSS.1997.609214
- OSROOSH YASIN ET AL: "Detecting fruit surface wetness using a custom-built low-resolution thermal-RGB imager", COMPUTERS AND ELECTRONICS IN AGRICULTURE, vol. 157, 25 January 2019 (2019-01-25), pages 509 - 517, XP085589536, ISSN: 0168-1699, DOI: 10.1016/J.COMPAG.2019.01.023

## Description

### Domaine technique

L'invention appartient au domaine de la culture de plantes, et plus précisément concerne un procédé détermination d'une évolution d'humectation foliaire, c'est-à-dire de l'apparition et la disparition d'eau sur la surface de feuilles de plantes cultivées.

### Arrière-plan technologique

La présence ou l'absence d'eau à la surface des feuilles de plantes cultivées peut entraîner des modifications importantes pour une plante. En particulier, la présence prolongée d'eau sur la surface des feuilles peut, lorsque d'autres conditions telles que la température sont favorables, entraîner l'apparition de maladies notamment le développement de champignons parasites. La présence d'eau sur les feuilles pendant une durée suffisante est en effet le principal facteur permettant aux spores des maladies fongiques (mildiou, rouille oïdium, cercosporiose...) de germer sur les feuilles des plantes hôtes (vigne, rosier, blé, betterave...) pour les contaminer.

La présence d'eau sur les feuilles peut notamment être causée par la pluie, la rosée, ou bien encore certaines pratiques d'irrigation. Lorsque certaines conditions météorologiques sont favorables à l'apparition de maladies fongiques, des traitement phytosanitaires sont parfois entrepris à titre préventif, alors même que ces traitements pouvaient ne pas être nécessaires car la durée de la présence d'eau sur les feuilles était trop courte pour permettre une contamination par le champignon. L'impossibilité de mesurer précisément la durée d'humectation des plantes introduit une incertitude sur la probabilité de contamination, et pour se prémunir d'une contamination fongique, les exploitants appliquent trop régulièrement des traitements préventifs, alors que la connaissance précise de la durée d'humectation pourrait permettre de déclencher des traitement curatifs uniquement lorsque cela est nécessaire.

Les coûts et l'impact écologique entraînés par les traitements phytosanitaires ont amené le besoin de mieux déterminer les conditions favorables à l'apparition des champignons parasites, au premier rang desquelles l'humectation foliaire. Certains procédés existants pour estimer la présence d'eau se basent sur des données globales peu précises. Par exemple des données météorologiques mesurent l'humidité relative, la température, la pression atmosphérique... et en se basant sur des modèles physicochimiques, estiment le point de rosée, qui est la température sous laquelle de la rosée se dépose naturellement par effet de saturation. L'humectation foliaire est alors déterminée pour le seul cas de la rosée. Toutefois, il s'agit souvent d'une estimation peu précise, ou qui requiert alors de nombreuses mesures locales.

Afin d'en améliorer la précision, il a été proposé d'utiliser des feuilles artificielles qui émettent un signal vaguement proportionnel à la quantité d'eau qui les mouille, par exemple sur la base de l'impédance de leur surface. Il s'agit toutefois d'une estimation peu fiable, et surtout très localisée, ne prenant pas en compte des variations spatiales comme une pente de terrain, ou la présence d'une haie.

En outre, l'humectation foliaire peut dépendre d'autres facteurs que la rosée, et par exemple la survenue ou non de précipitation, ou bien encore le séchage des feuilles, qui est difficilement modulable car dépendant de caractéristiques très locales telles que l'exposition au vent ou l'ensoleillement. Ainsi, le simple fait de savoir qu'il a plu ne permet pas de savoir combien de temps une feuille restera sèche. Or, c'est surtout la durée pendant laquelle l'eau est présente sur une feuille qui conditionne le risque de maladie fongique.

Enfin, l'hydrophobicité de la surface foliaire (ou d'un fruit atteint par une maladie fongique comme la pomme face à la tavelure), impact le temps de séchage et donc d'humectation. Un capteur de type feuille artificielle comme introduit plus haut, ne mesurera la présence d'eau qu'à sa surface, qui peut ne pas avoir la même hydrophobicité que celles des plantes, introduisant un biais par rapport à la situation réelle des feuilles.

L'article PATEL ARTH ET AL: "Strawberry plant wetness detection using computer vision and deep learning", SMART AGRICULTURAL TECHNOLOGY, vol. 1, décembre 2021, page 100013,ISSN: 2772-3755, DOI: 10. 101 6/j.atech.2021. 100013 décrit une technique de mesure de l'humectation foliaire par analyse d'images dans le visible et l'infrarouge permettant de détecter la présence de gouttes d'eau sur les feuilles et d'en déduire la surface mouillée et le degré d'humectation foliaire. L'article HEUSINKVELD ET AL: "A new remote optical wetness sensor and its applications", AGRICULTURAL AND FOREST METEOROLOGY, ELSEVIER, AMSTERDAM, NL, vol. 148, no. 4, 9 janvier 2008, pages 580-591, ISSN: 0168-1923 décrit une technique de détermination de la teneur en eau foliaire en mesurant un rapport d'intensités lumineuses à deux longueurs d'onde réfléchies par les feuilles, le faisceau lumineux ayant une longueur d'onde sélectionnée pour être absorbée par l'eau et une autre longueur d'onde sélectionnée pour ne pas être absorbée par l'eau.

Il existe donc un besoin pour un moyen de déterminer l'évolution de l'humectation foliaire de façon automatisée, sur des positions spatialement réparties dans un espace cultivé, avec une précision suffisante pour estimer au mieux les besoins d'intervention tels que l'application d'un traitement phytosanitaire.

### Présentation de l'invention

L'invention vise donc à proposer un procédé de détermination d'une évolution d'humectation foliaire d'une pluralité de plantes d'un espace cultivé qui permette une détermination précise de l'humectation foliaire à distance d'un système de détection, et de manière répétée pendant un durée d'observation.

À cet effet, l'invention propose un procédé de détermination d'une évolution d'humectation foliaire d'une pluralité de plantes d'un espace cultivé, en utilisant un système de détection comprenant :
- une source lumineuse avec un champ d'éclairage selon un axe optique d'éclairage,
- un capteur d'intensité lumineuse avec un champ d'acquisition selon un axe optique de capture, le capteur d'intensité lumineuse étant configuré pour recevoir un rayonnement lumineux et pour en déterminer un signal d'intensité lumineuse,
- une unité de traitement de données configurée pour recevoir le signal d'intensité lumineuse et déterminer un état d'humectation foliaire,
comprenant les étapes suivantes :
a) à chacun d'une pluralité d'instants d'acquisition, lesdits instants d'acquisition couvrant une durée d'observation d'au moins 4h avec des intervalles entre les instants d'acquisition inférieurs à 1h :
   a1) émission d'un faisceau lumineux par la source lumineuse vers une position de l'espace cultivé dans son champ d'éclairage,
   a2) réception par le capteur d'intensité lumineuse d'un rayonnement lumineux renvoyé depuis la position de l'espace cultivé, et détermination d'un signal d'intensité lumineuse à partir du rayonnement lumineux renvoyé, le signal d'intensité lumineuse étant fonction de la quantité de lumière du faisceau lumineux renvoyé depuis la position de l'espace cultivé,
b) pour chaque signal d'intensité lumineuse d'une pluralité de signaux d'intensité lumineuse d'instants d'acquisition différents pour une même position de l'espace cultivé, détermination d'une valeur d'intensité lumineuse pour la position de l'espace cultivé à partir du signal d'intensité lumineuse, la valeur d'intensité lumineuse étant représentative de l'intensité lumineuse du rayonnement lumineux renvoyé depuis la position de l'espace cultivé,
c) détermination d'une évolution d'humectation foliaire pour la position de l'espace cultivé au cours de la durée d'observation à partir de valeurs d'intensité lumineuse à des instants d'acquisition pour la position de l'espace cultivé, en comparant lesdites valeurs d'intensité lumineuse à au moins une valeur de référence correspondant à l'intensité lumineuse qui serait renvoyée par des feuilles sèches à la position visée de l'espace cultivé lorsque lesdites feuilles sont illuminées par le faisceau lumineux, résultant en une estimation de l'état d'humectation foliaire pour la position visée à l'instant d'acquisition.

Pouvoir mesurer la présence d'eau et la durée pendant laquelle cette eau est présente sur les feuilles des plantes permet d'estimer les risques de germination des spores, donc de contamination, et donc d'appliquer une lutte adaptée contre les maladies fongiques

L'invention est avantageusement complétée par les différentes caractéristiques suivantes prises seules ou selon leurs différentes combinaisons possibles :
- les plantes ont des feuilles hydrophobes, et des feuilles hydrophobes sont considérées mouillées lorsque la valeur d'intensité lumineuse est supérieure à une valeur de référence sinon les feuilles hydrophobes sont considérées comme sèches ;
- les plantes ont des feuilles hydrophiles, et des feuilles hydrophiles et leur taux d'humectation est estimé en comparant l'évolution de l'intensité lumineuse avec une trajectoire ou courbe de référence mesurée lors d'une phase de calibration;
- une répartition spatiale de l'humectation foliaire est déterminée, pour une pluralité de positions réparties dans l'espace cultivé;
- la source lumineuse et le capteur d'intensité lumineuse font partie d'un système optique configuré pour déplacer le champ d'éclairage et le champ d'acquisition, et l'étape a) est répétée pour une pluralité de positions différentes de l'espace cultivé dans son champ d'éclairage, le champ d'éclairage et le champ d'acquisition étant déplacés pour chaque position différente de l'espace cultivé;
- la source lumineuse et le capteur d'intensité lumineuse font partie d'un système optique comprenant au moins un organe réfléchissant sur un chemin optique du faisceau lumineux émis par la source lumineuse et sur un chemin optique du rayonnement lumineux renvoyé depuis la position de l'espace cultivé et reçu par le capteur d'intensité lumineuse;
- l'organe réfléchissant est mobile et configuré pour déplacer l'axe optique d'éclairage et l'axe optique de capture pendant une durée d'acquisition ou entre deux instants d'acquisition;
- le capteur d'intensité lumineuse est un capteur d'image, et le signal d'intensité lumineuse est une image bidimensionnelle du champ d'acquisition;
- la source lumineuse est configurée pour émettre un faisceau lumineux polarisé, et le système de détection comprend un séparateur configuré pour séparer le rayonnement lumineux renvoyé en fonction de la polarisation, et dans lequel un premier signal d'intensité lumineuse est obtenu pour une première polarisation, et un second signal d'intensité lumineuse est obtenu pour une seconde polarisation;
- la source lumineuse est configurée pour émettre un faisceau lumineux comprenant plusieurs longueurs d'onde distinctes, et le système de détection comprend un séparateur configuré pour séparer le rayonnement lumineux renvoyé en fonction des longueurs d'onde, et dans lequel un premier signal d'intensité lumineuse est obtenu pour une première plage de longueur d'onde, et un second signal d'intensité lumineuse est obtenu pour une seconde plage de longueur d'onde;
- le système de détection comprend un capteur de distance configuré pour déterminer une distance entre ledit système et la position de l'espace cultivé.

L'invention concerne également un système de détection d'humidité foliaire comprenant :
- une source lumineuse avec un champ d'éclairage selon un axe optique d'éclairage,
- un capteur d'intensité lumineuse avec un champ d'acquisition selon un axe optique de capture, le capteur d'intensité lumineuse étant configuré pour recevoir un rayonnement lumineux et pour en déterminer un signal d'intensité lumineuse,
- une unité de traitement de données configurée pour recevoir le signal d'intensité lumineuse et déterminer un état d'humectation foliaire,
le système étant configuré pour mettre en œuvre le procédé selon l'invention.

### Présentation des figures

D'autres caractéristiques, buts et avantages de l'invention ressortiront de la description qui suit, qui est purement illustrative et non limitative, et qui doit être lue en regard des dessins annexés sur lesquels :

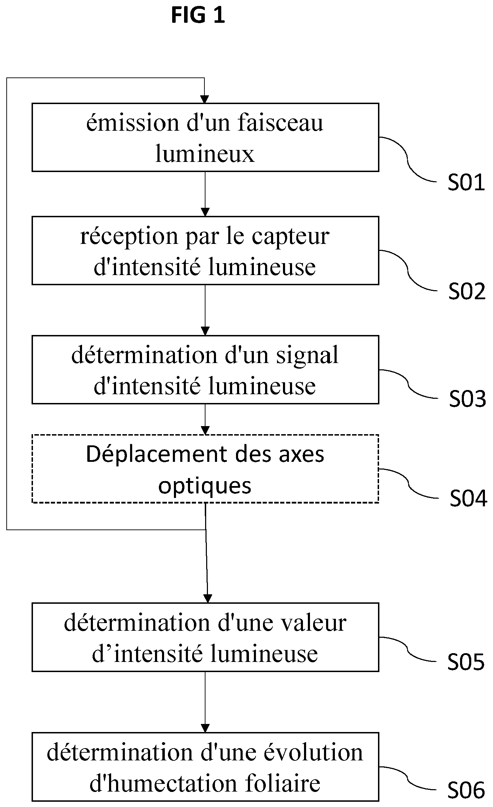

- la figure 1 est un diagramme montrant un exemple des étapes de mise en œuvre d'un procédé selon un mode de réalisation possible de l'invention ;
- la figure 2 montre un exemple de système de détection mettant en œuvre l'invention selon un mode de réalisation possible, avec une source lumineuse composite,
- la figure 3 montre un autre exemple de système de détection mettant en œuvre l'invention selon un mode de réalisation possible, avec une combinaison des chemins optiques d'émission et de capture,
- la figure 4 montre un autre exemple de système de détection mettant en œuvre l'invention selon un mode de réalisation possible, avec un capteur d'intensité lumineuse séparant la lumière reçue selon une caractéristique de celle-ci.

Les modes de réalisation illustrés sont combinables entre eux.

### Description détaillée

On entend par humectation foliaire l'indication et/ou la quantification de la présence d'eau sur une feuille. Par exemple, l'humectation foliaire peut correspondre aux états "sec" ou "mouillé" pour une feuille, l'état mouillé pouvant être raffiné par des degrés quantifiant la présence d'eau ou sa répartition (densité ou taille des gouttes par exemple).

En référence aux figures annexées, le procédé de détermination d'une évolution d'humectation foliaire d'une pluralité de plantes d'un espace cultivé utilise un système de détection 1 comprenant :
- une source lumineuse 2 avec un champ d'éclairage 4 selon un axe optique d'éclairage 6, configurée pour émettre un faisceau lumineux 8
- un capteur d'intensité lumineuse 10 avec un champ d'acquisition 12 selon un axe optique de capture 14, le capteur d'intensité lumineuse 10 étant configuré pour recevoir un rayonnement lumineux 16 et pour en déterminer un signal d'intensité lumineuse, et
- une unité de traitement de données 20 configurée pour recevoir le signal d'intensité lumineuse et déterminer un état d'humectation foliaire.

La source lumineuse 2 et le capteur d'intensité lumineuse 10 font partie d'un système optique 30, et sont placés au plus près l'un de l'autre, typiquement à quelques centimètres voire moins. Le système optique 30 est placé à proximité des plantes cultivées afin que celles-ci se trouvent dans le champ d'éclairage 4 de la source lumineuse 2 et dans le champ d'acquisition 12 du capteur d'intensité lumineuse 10. Par exemple, le système optique 30 peut être placé dans un champ de culture ou en bordure de celui-ci.

De préférence, ce système optique 30 est surélevé par rapport aux feuilles 22 des plantes cultivées, et est typiquement monté sur un support tel qu'un mât, poteau ou trépied. Le placement en surélévation du système optique 30 permet d'accroître la portée du champ d'éclairage 4 et du champ d'acquisition 12, et ainsi d'y englober une surface plus importante de plantes cultivées. La surélévation permet également de présenter plus de surface supérieure des feuilles 22 au système optique 30, et donc dans le champ d'éclairage 4 et le champ d'acquisition 12. La surélévation est de préférence d'au moins 1 m par rapport à la surface du sol sous le système optique 30, et de préférence d'au moins 1,5 m, et de préférence d'au moins 2 m, au niveau de l'objectif par lequel est émis le faisceau lumineux 8 et/ou par lequel rentre le rayonnement lumineux 16 réfléchi par les plantes.

La source lumineuse 2 peut être une lampe, par exemple similaire à un flash photographique, configurée pour émettre une lumière intense pendant un court laps de temps. La source lumineuse 2 peut aussi être un laser.

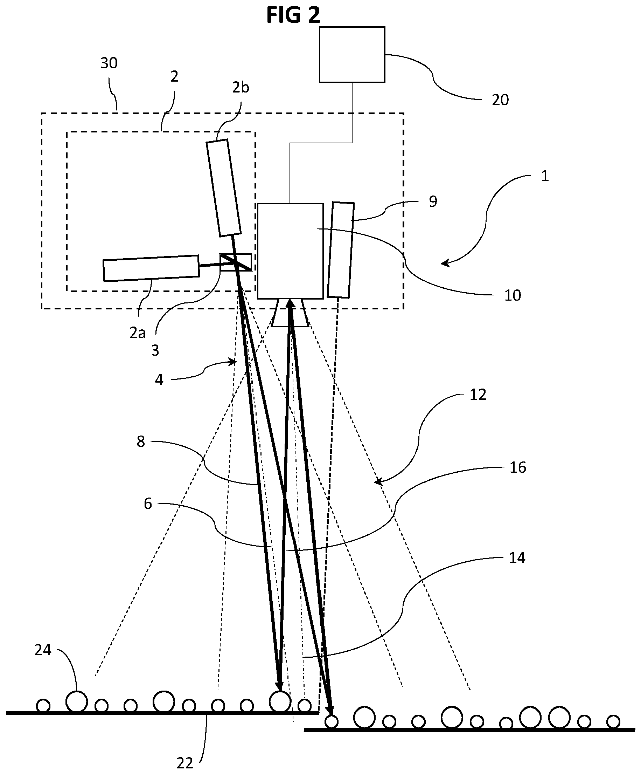

La source lumineuse 2 peut être configurée pour émettre une lumière polarisée, par exemple avec une polarisation rectiligne, circulaire ou elliptique. La source lumineuse 2 peut être configurée pour émettre une lumière blanche, mais de préférence la source lumineuse 2 est configurée pour émettre une lumière monochromatique. Une longueur d'onde du faisceau lumineux 8 émis par la source lumineuse 2 est choisie pour interagir différemment avec les feuilles 22 en fonction de la présence d'eau sur celles-ci. De préférence, afin de ne pas créer de gêne pour la faune, le faisceau lumineux 8 est émis dans l'infra-rouge, avec des longueurs d'onde supérieures à 780 nm. Plusieurs sources lumineuses 2 peuvent être prévues, formant une source lumineuse 2 composite dont chaque source lumineuse 2 émet une lumière ayant des caractéristiques propres, par exemple en longueur d'onde et/ou polarisation. Lorsque plusieurs sources lumineuses 2 sont utilisées, celles-ci émettent de préférence dans des longueurs d'onde distinctes et différentes. Dans l'exemple de la figure 2, une première source lumineuse 2a peut émettre dans une première longueur d'onde, par exemple dans le vert, tandis que la seconde source lumineuse 2b peut émettre dans une seconde longueur d'onde, par exemple dans le rouge ou l'infrarouge.

Le capteur d'intensité lumineuse 10 peut être un photodétecteur ponctuel, et est par exemple une photodiode. Le signal d'intensité lumineuse est alors directement lié à l'intensité lumineuse du rayonnement lumineux 16 reçu par le capteur d'intensité lumineuse 10, dont l'origine est le faisceau lumineux 8 émis par la source lumineuse 2. Le capteur d'intensité lumineuse 10 peut être un capteur d'image, et le signal d'intensité lumineuse est une image bidimensionnelle du champ d'acquisition 12.

La source lumineuse 2 émet de la lumière dans un champ d'éclairage 4 selon un axe optique d'éclairage 6, tandis que le capteur d'intensité lumineuse 10 capture le rayonnement lumineux 16 dans un champ d'acquisition 12 selon un axe optique de capture 14. L'axe optique d'éclairage 6 et l'axe optique de capture 14 sont proches, formant un angle inférieur à 20°, et de préférence inférieur à 10°, et de préférence encore inférieur à 5°. Pour ce faire, la source lumineuse 2 et le capteur d'intensité lumineuse 10 sont proches l'un de l'autre, et de préférence placé dans un même boîtier correspondant au système optique 30.

Idéalement, l'axe optique d'éclairage 6 et l'axe optique de capture 14 sont coaxiaux et confondus en sortie du système optique 30. Notamment, le faisceau lumineux 8 et le rayonnement lumineux 16 renvoyé capté par le capteur d'intensité lumineuse 10 peuvent partager une même portion de chemin optique, et notamment passer par un même composant optique du système optique 30, comme par exemple un même objectif optique.

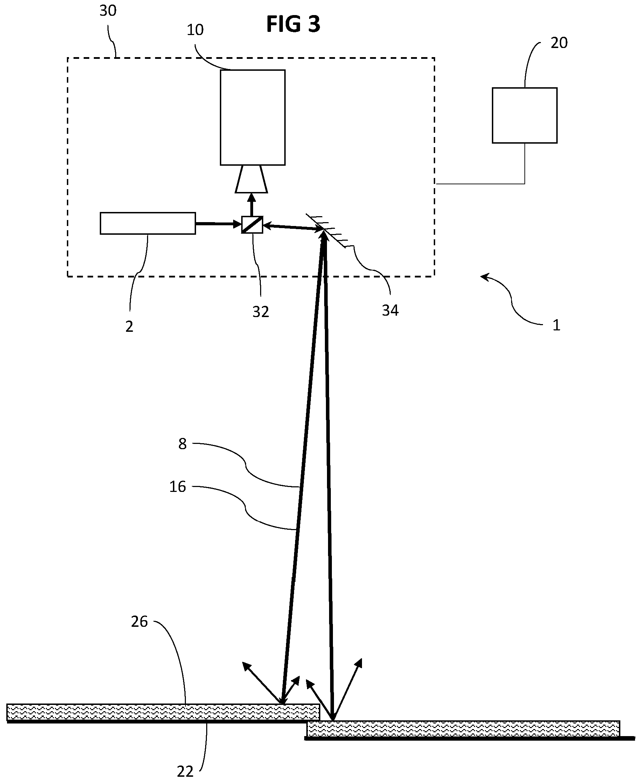

Pour ce faire, le système optique 30 peut comprendre au moins un organe réfléchissant 32 tel qu'un miroir, un miroir semi-réfléchissant, ou tout autre composant optique permettant de combiner et/ou séparer des chemins optiques, sur lequel sont incidents le faisceau lumineux 8 et le rayonnement lumineux 16 renvoyé à destination du capteur d'intensité lumineuse 10, comme dans l'exemple de la figure 3. Un tel organe réfléchissant 32 est disposé sur un chemin optique du faisceau lumineux 8 émis par la source lumineuse 2 et sur un chemin optique du rayonnement lumineux 16 renvoyé depuis la position de l'espace cultivé et reçu par le capteur d'intensité lumineuse 10.

Le système optique 30 est configuré pour déplacer l'axe optique d'éclairage 6 et l'axe optique de capture 14, et donc le champ d'éclairage 4 et le champ de capture. Le déplacement peut être effectué par un mouvement du système optique 30, par exemple une rotation du système optique 30. Par exemple, comme illustré sur la Figure 3, un organe réfléchissant 34 tel qu'un miroir disposé sur un chemin optique du faisceau lumineux 8 émis par la source lumineuse 2 et/ou sur un chemin optique du rayonnement lumineux 16 renvoyé est mobile, et par un changement de son inclinaison déplace l'axe optique d'éclairage 6 et l'axe optique de capture 14. Il est alors possible d'effectuer un balayage des positions de l'espace cultivé.

Une position de mesure n'est pas nécessairement ponctuelle, et peut présenter une certaine étendue spatiale. Une position de mesure peut être aussi restreinte que la zone couverte par un pixel d'un capteur d'image, voire par les pixels adjacents, mais peut aussi correspondre à une plante, ou même à à tout le champ d'acquisition.

Le procédé comprend une étape d'acquisition mise en œuvre à une pluralité d'instants d'acquisition, de préférence pour plusieurs positions de l'espace cultivé. La durée d'observation couvre une durée d'observation compatible avec la durée du phénomène d'humectation foliaire mesuré, et avec des intervalles entre les instants d'acquisition permettant de capturer précisément l'évolution dudit phénomène. Les instants d'acquisition couvrent ainsi une durée d'observation d'au moins 4h avec des intervalles entre les instants d'acquisition inférieurs à 1h. De préférence, les instants d'acquisition sont séparés par des intervalles inférieurs à 40 minutes, et de préférence encore par des intervalles inférieurs à 20 minutes. De préférence, les intervalles entre les instants d'acquisition pour une même position visée de l'espace cultivée sont supérieurs à une minute. Par exemple, si une image bidimensionnelle de l'ensemble du champ d'acquisition 12 est acquis à chaque instant d'acquisition, cette acquisition est répétée à chaque intervalle mentionné. Si l'acquisition implique un balayage du champ d'acquisition position par position dans l'espace cultivé, alors l'ensemble des positions visées est parcouru pendant cet intervalle. L'intervalle entre les instants d'acquisition est un compromis entre l'avantage de détecter l'humectation foliaire avec une bonne résolution temporelle, et l'inutilité de trop multiplier les instants d'acquisition au prix d'exigences matérielles et de grandes quantités de données nécessitant des temps de traitements trop importants.

Les instants d'acquisition peuvent être régulièrement répartis sur la durée d'observation, ou peuvent avoir une densité temporelle variant avec les probabilités que les feuilles 22 soient mouillées. Par exemple, les instants d'acquisition peuvent être plus nombreux lorsque les conditions sont favorables à l'apparition de la rosée, à savoir, un peu avant et après le coucher et lever du soleil et pendant la nuit pour la rosée, et lors d'une pluie et après celle-ci pour mesurer le temps d'humectation dû à la pluie. La durée d'observation est typiquement d'au moins 4h, mais est de préférence supérieure à 6h, et de préférence également supérieure à 10h. Il y a au moins 4 instants d'acquisition pendant la durée d'observation, de préférence au moins 10 instants d'acquisition, et de préférence encore au moins 20 instants d'acquisitions.

Cette étape d'acquisition comprend deux parties successives pouvant cependant se chevaucher temporellement. Dans une première partie (étape S01), la source lumineuse 2 émet un faisceau lumineux 8 vers une position de l'espace cultivé dans son champ d'éclairage 4. Plusieurs sources lumineuses 2 peuvent être utilisées, de préférence avec des axes optiques d'éclairage 6 coaxialisés, par exemple avec des lames semi-réfléchissantes 3. La figure 2 montre un exemple d'utilisation de deux sources lumineuses 2a, 2b formant une source lumineuse 2 composite : une première source lumineuse 2a émet un premier faisceau lumineux 8 avec des premières caractéristiques (longueur d'onde, polarisation), une seconde source lumineuse 2b émet un second faisceau lumineux 8 avec des secondes caractéristiques (longueur d'onde, polarisation), et le premier faisceau lumineux 8 et le second faisceau lumineux 8 sont combinés par un miroir semi-réfléchissant 3, donnant alors un faisceau lumineux 8 composite à destination de la position de l'espace cultivé.

Après une éventuelle réflexion sur un organe réfléchissant 34 du système optique 30, le faisceau lumineux 8 sort du système optique 30 et éclaire une position de l'espace cultivé, où se trouvent des feuilles 22 de plantes. Les feuilles 22 peuvent avoir ou non de l'eau sur leur surface. Lorsque les plantes ont des feuilles 22 hydrophobes, l'eau forme des gouttes 24 plus ou moins sphériques sur celles-ci. Les gouttes 24 et leur support 22 se comportent comme un dispositif réfléchissant (catadioptre ou rétroréflecteur) qui renvoie la lumière incidente dans la même direction d'incidence, c'est-à-dire vers la source lumineuse 2, quel que soit l'angle d'incidence des rayons lumineux avec ces gouttes 24. Il s'agit de l'effet connu sous le nom de "heiligenschein". Lorsque les plantes ont des feuilles 22 hydrophiles, cet effet heiligenschein n'apparaît généralement pas. Au contraire, l'eau à la surface des feuilles 22 tend à former un film 26 qui diffuse la lumière, et cause donc une réduction de l'intensité lumineuse renvoyée vers la source, comme dans l'exemple de la figure 3. Toutefois, il est possible qu'à un faible degré d'humectation foliaire, des gouttes apparaissent même à la surface de feuilles 22 hydrophiles créant un effet heiligenschein court dans le temps si la rosée continue de se former. Donc le comportement de l'intensité lumineuse réfléchie par des feuilles hydrophiles lors de la formation de la rosée est composé premièrement d'une augmentation de la réflexion lumineuse (comme sur les feuilles hydrophobes), puis une transition vers une baisse de la réflexion pour finir par une intensité inférieure à une intensité lumineuse réfléchie par une feuille sèche. Le suivi de l'intensité réfléchie dans le temps est donc important pour estimer l'état d'humectation de la feuille.

Ainsi, une partie du faisceau lumineux 8 est renvoyée vers la source lumineuse 2 par le chemin optique emprunté par ledit faisceau lumineux 8, et est donc renvoyée vers le capteur d'intensité lumineuse 10. L'intensité du rayonnement lumineux 16 renvoyé au capteur d'intensité lumineuse 10 dépend donc de l'humectation foliaire.

Le capteur d'intensité lumineuse 10 reçoit (étape S02) le rayonnement lumineux 16 renvoyé depuis la position de l'espace cultivé, et détermine un signal d'intensité lumineuse à partir de celui-ci. Le signal d'intensité lumineuse est fonction de la quantité de lumière du faisceau lumineux 8 renvoyé depuis la position de l'espace cultivé, et donc dépend de la présence ou non d'eau sur les feuilles 22.

De préférence, l'intensité lumineuse relevée par le capteur d'intensité lumineuse rend compte de l'intensité lumineuse du rayonnement renvoyé 16 dans au moins une longueur d'onde située dans une plage entre 300 nm et 1350 nm, de préférence entre 300 nm et 1300 nm, et de préférence encore entre 800 nm et 1200 nm pour ne pas déranger la faune, ou entre 380 nm et 780 nm afin d'utiliser le spectre visible.

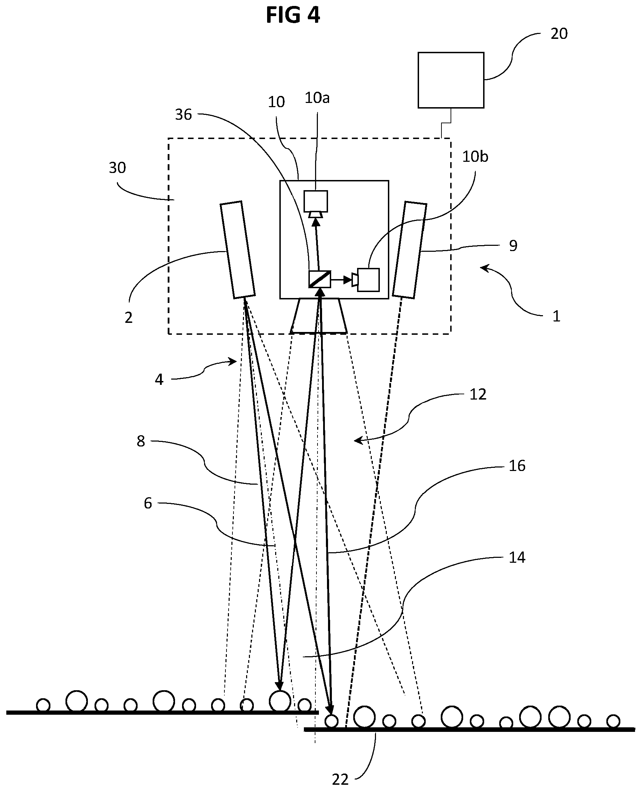

Dans l'exemple de la figure 2, le capteur d'intensité lumineuse 10 reçoit directement le rayonnement lumineux 16 renvoyé. Dans l'exemple de la figure 3, le rayonnement lumineux 16 renvoyé remonte le même chemin optique que le faisceau lumineux 8 d'éclairage, et notamment est réfléchi par un organe réfléchissant 34, puis est dévié du chemin optique du faisceau lumineux 8 d'éclairage par un séparateur de type miroir semi-réfléchissant 32 pour atteindre le capteur d'intensité lumineuse 10. Dans l'exemple de la figure 4, un séparateur 36 sépare le rayonnement lumineux 16 renvoyé en fonction de la polarisation ou de la longueur d'onde constituant le rayonnement lumineux 16 renvoyé : une première polarisation ou couleur est dirigée vers un premier capteur d'intensité lumineuse 10a, et une seconde polarisation ou couleur est dirigée vers un second capteur d'intensité lumineuse 10b. Il est ainsi possible d'acquérir un signal d'intensité lumineuse distinct pour chaque polarisation considérée et/ou pour chaque longueur d'onde considéré. Par exemple, un filtre dichroïque ou un miroir dichroïque peut être utilisé pour séparer des longueurs d'onde du rayonnement lumineux 16 renvoyé. Dans la mesure où l'angle de dépolarisation dépend de la longueur d'onde, il est avantageux de séparer en fonction de la polarisation, puis en fonction de la couleur, ou inversement.

La polarisation de la lumière peut également être utilisée pour distinguer entre le rayonnement lumineux renvoyé par de l'eau illuminée par le faisceau lumineux 8, et une autre source de renvoi du faisceau lumineux 8, par exemple une zone sèche de feuille. Lorsque le faisceau lumineux 8 émis par la source lumineuse 2 est polarisé (polarisation elliptique, circulaire ou linéaire), ce qui est notamment le cas pour un laser, la lumière émise aura tendance à être dépolarisée par sa réflexion sur l'eau présente à la surface d'une plante. Ainsi, en identifiant parmi les rayonnements lumineux réfléchis l'intensité lumineuse dont le plan de polarisation aura tourné par rapport au plan d'émission d'une source lumineuse telle qu'un laser, par exemple au moyen d'un filtre polariseur en amont du capteur d'intensité lumineuse 10, il est possible de mieux mettre en évidence le seul rayonnement lumineux renvoyé par de l'eau illuminée par le faisceau lumineux 8. Par exemple, il est possible d'utiliser un filtre polariseur ayant une polarisation inverse ou complémentaire (e.g. perpendiculaire) à celle de la lumière émise par la source lumineuse 2. Une filtration supplémentaire laissant passer la bande de longueur d'onde de la source lumineuse lorsque celle-ci est restreinte, par exemple inférieure à 50 nm, et de préférence inférieure à 20 nm, permet de mieux encore identifier le seul rayonnement lumineux renvoyé par de l'eau illuminée par le faisceau lumineux 8.

Il est possible de prévoir d'effectuer cette étape d'acquisition plusieurs fois de manière rapprochée, par exemple dans un intervalle inférieur à 10 secondes, pour une même position visée, afin de disposer de plusieurs signaux d'intensité lumineuse intermédiaire qui sont ensuite combinés ensemble (par exemple en faisant la moyenne) pour donner un signal d'intensité lumineuse pour la position visée pour un instant d'acquisition. Cette approche permet de compenser certains bruits, notamment lorsque l'intensité du rayonnement lumineux 16 renvoyé est faible.

Afin de compenser le bruit ambiant, notamment lorsque l'acquisition est faite en journée, certaines (de préférence toutes) les étapes d'acquisition peuvent comprendre une étape préalable d'acquisition d'un signal d'intensité lumineuse ambiante en l'absence de l'émission d'un faisceau lumineux 8. Ce signal d'intensité lumineuse ambiante peut être soustrait au signal d'intensité lumineuse acquis ensuite, afin de soustraire les rayonnements ne provenant pas de l'émission du faisceau lumineux 8.

Une fois cette étape d'acquisition effectuée, et donc une fois obtenu un signal d'intensité lumineuse pour la position de l'espace cultivé visée, le système optique 30 peut déplacer (étape S04) l'axe optique d'éclairage 6 et l'axe optique de capture 14 vers une autre position de l'espace cultivé, et une nouvelle étape d'acquisition est mise en œuvre pour cette autre position de l'espace cultivé. Il est ainsi possible de balayer tout un ensemble de positions spatialement réparties dans l'espace cultivé. La distance à laquelle il est possible de viser de manière efficace une position de l'espace cultivé dépend principalement de l'atténuation du faisceau lumineux 8 d'éclairage et de la sensibilité du capteur d'intensité lumineuse 10. Typiquement, les positions visées s'étendent jusqu'à une distance d'au moins 5 m du système optique 30, et de préférence d'au moins 10 m du système optique 30, et de préférence encore d'au moins 20 m. La sensibilité du capteur d'intensité lumineuse 10 permettra d'augmenter la distance de mesure davantage. L'extension angulaire des positions visées autour du système optique 30 dépend de la capacité de déplacement des champs d'éclairage et des champs d'acquisition, et peut même atteindre 360° en cas de rotation du système optique 30, bien qu'une plage angulaire de l'ordre de 40 à 180° soit plus courante pour un balayage par miroir mobile, par exemple en bordure d'un champ.

L'étape d'acquisition est renouvelée pour chaque position de l'espace cultivé visée pour plusieurs instants d'acquisition couvrant la durée d'observation. On obtient ainsi pour chaque position de l'espace cultivé visée une séquence de signaux d'intensité lumineuse d'instants d'acquisition différents. Pour chaque signal d'intensité lumineuse de la pluralité de signaux d'intensité lumineuse d'instants d'acquisition différents, une valeur d'intensité lumineuse est déterminée (étape S05) à partir du signal d'intensité lumineuse, cette valeur d'intensité lumineuse étant représentative de l'intensité lumineuse du rayonnement lumineux 16 renvoyé depuis la position de l'espace cultivé. Si le capteur d'intensité lumineuse 10 est ponctuel, comme par exemple une photodiode, le signal d'intensité lumineuse est directement une valeur d'intensité lumineuse.

Il est également possible d'envisager de déplacer l'axe optique d'éclairage et/ou l'axe optique de capture pendant une durée d'acquisition, c'est-à-dire avec un déplacement continu qui balaie une portion de l'espace cultivé.

Lorsque le capteur d'intensité lumineuse 10 est bidimensionnel, comme dans le cas d'un imageur ou d'une pluralité de photodiodes, alors le signal d'intensité lumineuse peut comprendre plusieurs valeurs représentatives de l'intensité lumineuse, comme par exemple plusieurs valeurs de niveaux de gris, pour une même position de l'espace cultivé. Dans ce cas, une valeur d'intensité lumineuse en est dérivée pour chaque position de l'espace cultivée considérée. Il peut s'agir de calculs statistiques par exemple d'une moyenne ou d'une médiane, éventuellement locale, ou bien encore simplement d'une association entre une valeur du signal d'intensité lumineuse et une position. Ainsi, dans le cas d'une image, le niveau de gris d'un ou plusieurs pixels peut être associé à une position correspondante dans l'espace cultivé. En particulier, lorsque le capteur d'intensité lumineuse 10 est bidimensionnel et acquiert une image bidimensionnelle en tant que signal d'intensité lumineuse, l'image comprend un ensemble bidimensionnel de pixels chacun associé à un niveau de gris. Une valeur d'intensité lumineuse est alors de préférence une valeur moyenne de niveaux de gris de tout ou partie des pixels.

Dans le cas où le système optique 30 déplace le champ d'éclairage 4 ou le champ d'acquisition 12, une indexation de ce déplacement permet d'associer chaque valeur d'intensité lumineuse à une position de l'espace cultivé.

Il peut être prévu de ne pas déplacer l'axe optique d'éclairage 6 et l'axe optique de capture 14, et de viser toujours la même position de l'espace cultivé. C'est notamment envisageable si le capteur d'intensité lumineuse 10 est un capteur d'image, et le signal d'intensité lumineuse est une image bidimensionnelle du champ d'acquisition 12, qui associe à chacune d'une pluralité de positions dans l'espace cultivé, une valeur d'intensité lumineuse respective, typiquement un niveau de gris.

Afin d'améliorer la localisation de la position visée, il est possible de munir le système de détection d'un capteur de distance 9, par exemple de type Lidar, et d'acquérir, à chaque instant d'acquisition une mesure de distance associée à la position visée, comme dans l'exemple de la figure 2 ou 4. Cette mesure de distance permet alors de repérer plus précisément la position visée par rapport au système de détection, et ainsi d'affecter de manière plus préciser une valeur d'intensité lumineuse à une position. On peut alors plus facilement organiser spatialement les positions visées, par exemple sur une carte. La connaissance de cette distance permet également de corriger des déformations dues à la perspective. Le rôle du capteur de distance 9 peut aussi être joué par la source lumineuse 2 lorsqu'elle inclut un nombre de lasers, en utilisant le « temps de vol » du rayonnement lumineux 16 renvoyé après l'émission du faisceau lumineux 8 par la source lumineuse 2.

La séparation du rayonnement lumineux 16 renvoyé en fonction des longueurs d'onde ou de la polarisation permet de disposer de plusieurs signaux, d'intensité lumineuse et de dépolarisation, pour une même position visée. Il est alors possible de mieux mettre en évidence l'interaction entre le faisceau lumineux 8 et l'eau éventuellement présente sur les feuilles 22.

On sait en effet que la polarisation d'un rayon polarisé incident sur une goutte d'eau est modifiée en fonction de la forme de la goutte et de sa taille. Cette information permet ainsi d'inférer de la taille de gouttes 24 d'eau à la surface des feuilles 22, ou de l'épaisseur du film, de la forme (rosée ou pluie), de la densité de ces gouttes 24 sur la surface.

D'un autre côté on sait aussi que les feuilles 22 absorbent des longueurs d'ondes qui dépendent de leur structure et de leur composition. Par exemple elles absorbent le rouge et le bleu pour la photosynthèse, mais réfléchissent le vert, d'où leur couleur, et réfléchissent aussi l'infrarouge proche. La présence d'eau à la surface de la feuille 22 peut modifier la fraction relative de chaque longueur d'onde réfléchie par la feuille, mais peut aussi renseigner sur le fait qu'il s'agit d'une feuille 22 ou d'une autre surface, comme de la terre ou une tige. Ceci permet ainsi d'apporter une information contextuelle sur le type de surface frappée par le faisceau incident, et donc conclure qu'une réduction de l'intensité du signal réfléchi vient du fait qu'il s'agit de terre plutôt que d'une feuille, et donc éliminer la mesure pour qu'elle ne biaise pas les mesures sur feuilles 22. L'interprétation de ces différents facteurs (dépolarisation, variation d'intensité lumineuse, nature du support) peut passer en partie par l'utilisation de techniques d'apprentissage automatique ou statistique (en anglais "machine/statistical learning"), sur la base de mesures faites sur différentes situations connues et qui servent à un possible apprentissage supervisé.

Il est ensuite déterminé une humectation foliaire à la position de l'espace cultivé en fonction de la valeur d'intensité lumineuse associée à cette position. À cet effet, le système de détection 1 comprend une unité de traitement de données 20 configurée pour recevoir le signal d'intensité lumineuse et déterminer un état d'humectation foliaire à la position visée à partir du signal d'intensité lumineuse. L'unité de traitement de données 20 comprend au moins un processeur et une mémoire, et des interfaces de communication permettant de recevoir les données et de communiquer ou d'interagir avec un utilisateur. L'unité de traitement de données 20 peut également être utilisée pour piloter le système optique 30, causant l'émission du faisceau lumineux 8 et l'acquisition du signal d'intensité lumineuse, ou contrôlant le déplacement du champ d'éclairage 4 et du champ d'acquisition 12.

La détermination de l'humectation foliaire peut notamment faire appel à une valeur de référence, qui correspond typiquement à l'intensité lumineuse qui serait renvoyée par des feuilles 22 sèches à la position visée de l'espace cultivé lorsqu'elles sont illuminées par le faisceau lumineux 8. Cette valeur de référence peut être renseignée a priori, ou peut de préférence être obtenue ou mise à jour in situ, par exemple en effectuant une mesure de calibrage lorsqu'il est connu que les feuilles 22 sont sèches. Ces mesures de calibrage peuvent être répétées à intervalles réguliers (une à 3 fois par semaine lorsque les feuilles 22 sont sèches) pour éviter les dérives et prendre en compte la croissance des plantes qui modifie de fait la surface foliaire analysée et la surface de sol nu. Le dispositif avec une pluralité de longueurs d'ondes peut en effet mesurer l'évolution de la surface foliaire dans le temps grâce par exemple au calcul de l'indice de végétation par différence normalisée (plus connu sous l'acronyme anglais de NDVI pour "normalized difference vegetation index") en fonction du choix des longueurs d'ondes.

En particulier, la valeur d'intensité lumineuse peut varier en fonction de la nature de la surface mais aussi en fonction de la distance entre la position visée et le système optique 30, car la puissance du faisceau lumineux 8 atteignant la position visée, et du rayonnement lumineux 16 renvoyé, décroit avec la distance à cause de la divergence ou de la dispersion. L'utilisation d'un capteur de distance 9 tel qu'un LIDAR permet, grâce à la mesure précise de la distance entre la position visée et le système optique 30, de compenser ces effets de distance, par exemple en modulant le temps d'exposition du capteur d'intensité lumineuse 10 pour une position, ou en appliquant un facteur correctif aux valeurs relevées ou aux valeurs de référence auxquelles elles sont comparées.

Lorsque les plantes ont des feuilles 22 hydrophobes, les feuilles 22 hydrophobes sont considérées mouillées lorsque la valeur d'intensité lumineuse est supérieure à la valeur de référence, en raison de l'effet heiligenschein évoqué précédemment. De fait, l'intensité lumineuse réfléchie est une fonction monotone croissante du taux d'humectation. De préférence, la valeur d'intensité lumineuse est considérée comme supérieure si elle dépasse 115%, et de préférence 130% de la valeur de référence. Sinon les feuilles 22 hydrophobes sont considérées comme sèches. En effet, en l'absence de gouttes 24 d'eau sur les feuilles 22, la lumière du faisceau lumineux 8 est peu réfléchie car absorbée par les feuilles 22. Il est à noter que l'intensité lumineuse est croissante avec la densité de gouttes 24 sur les feuilles 22 jusqu'à une valeur plateau, et la valeur d'intensité lumineuse permet donc non seulement de déterminer la présence d'eau sur les feuilles 22, mais également de quantifier cette présence d'eau.

A l'inverse, lorsque les plantes ont des feuilles 22 hydrophiles, des feuilles 22 hydrophiles réfléchissent une intensité lumineuse qui est une fonction non-monotone du taux d'humectation et donc leur taux d'humectation peut être estimé en comparant l'évolution de l'intensité lumineuse avec une trajectoire ou courbe de référence, par exemple mesurée lors d'une phase de calibration. Par exemple, en reprenant la valeur de référence, des feuilles 22 hydrophiles peuvent être considérées mouillées à cette position lorsque la valeur d'intensité lumineuse est inférieure à la valeur de référence. De préférence, la valeur d'intensité lumineuse est considérée comme inférieure si elle est moindre que 90%, et de préférence 80% de la valeur de référence, et encore de préférence moindre que 70% de la valeur de référence. Comme évoqué plus haut, l'effet heiligenschein peut cependant apparaître pour de faibles degrés d'humectation foliaire même pour des feuilles 22 hydrophiles. Ainsi, des feuilles 22 hydrophiles peuvent être considérées mouillées à cette position lorsque la valeur d'intensité lumineuse est supérieure à la valeur de référence. De préférence, la valeur d'intensité lumineuse est considérée comme supérieure si elle dépasse 115%, et de préférence 130% de la valeur de référence. Si la valeur d'intensité lumineuse est proche de la valeur de référence, et ne peut être considérée comme suffisamment inférieure ou suffisamment supérieure à la valeur de référence qui correspond à une feuille sèche, les feuilles 22 hydrophiles sont considérées comme sèches. Il est également possible de prendre en compte une évolution de la valeur de l'intensité lumineuse. Par exemple pour une feuille 22 hydrophile, l'apparition de la rosée peut se traduire dans un premier temps par une croissance de la valeur de l'intensité lumineuse (apparition de gouttes), puis une décroissance (apparition du film d'eau) dans un second temps. Ainsi, l'utilisation d'une courbe de référence permet de prendre en compte cette évolution temporelle de la valeur de référence utilisée pour estimer l'état d'humectation des feuilles 22.

La nature hydrophile ou hydrophobe de la feuille d'une plante peut être déterminée au moyen de la sphéricité des gouttes d'eau à la surface de cette feuille, et cette sphéricité est définie par l'angle de contact de la goutte avec la feuille. Cet angle de contact varie théoriquement de 0°pour les surfaces hydrophiles jusqu'à 180°pour les surfaces hydrophobes. On considère qu'une surface est hydrophile ou hydrophobe quand leur angle de contact est respectivement inférieur ou supérieur à 90°. Cet angle dépend de l'énergie libre de surface et de la tension de surface du liquide. Pour les plantes, les surfaces hydrophobes contiennent souvent à leur surface des poils ou une couche de cire. Par exemple, les feuilles de colza Brassica Napus ont une cire de surface qui rend leurs surfaces hydrophobes, avec un angle de contact d'environ 110°-116°. A l'inverse, les feuilles de vigne Vitis Vinifera sont hydrophiles, avec un angle de contact d'environ 62° ±14°. Ainsi, plus une surface sera hydrophobe (e.g. plus l'angle de contact sera grand), plus le faisceau rétrodiffusé sera concentré. Théoriquement, pour une surface infiniment plate et pour une goutte reposant directement sur la surface, le maximum de rétrodiffusion est atteint pour un angle d'incidence d'environ 60° par rapport à la surface de la feuille. Dans ces conditions, la surface derrière la goutte sera au point focal de celle-ci. Cependant, cette valeur peut être plus faible en considérant l'épaisseur de la surface (e.g. le point focal est à l'intérieur de la surface) ou une goutte surélevée par rapport à la surface (présence d'une cire transparente ou de poils), et peut par exemple descendre jusqu'à 54°.

Les valeurs d'intensité lumineuse relevées lorsque les feuilles 22 sont sèches peuvent être utilisées pour mettre à jour la valeur de référence. Par exemple, une valeur moyenne peut être dérivée des valeurs d'intensité lumineuse les plus proches de la valeur de référence précédente pour donner une nouvelle valeur de référence. La mise à jour de la valeur de référence permet de prendre en compte une évolution de l'espace cultivé, et notamment la croissance des plantes.

L'humectation foliaire peut être déterminée par une ou plusieurs comparaisons résultant en une estimation de l'état d'humectation foliaire pour la position visée à l'instant d'acquisition. De préférence, l'estimation est une classification. Plusieurs valeurs de référence peuvent être utilisées, chacune correspondant à un degré d'humectation, la classification permettant d'obtenir l'humectation foliaire se faisant alors suivant la valeur de référence la plus proche. Une valeur de référence importante reste néanmoins la valeur d'intensité lumineuse correspondant à l'absence d'eau sur les feuilles 22.

Il est aussi possible de faire une régression (linéaire ou non) pour obtenir une courbe avec laquelle une valeur d'intensité lumineuse en abscisse nous renseigne sur le taux d'humectation en ordonnée. On pourra donc avoir une continuité de taux d'humectation correspondant à une continuité d'intensité lumineuse.

Il est possible d'utiliser un réseau de neurone, par exemple un perceptron multicouches, préalablement entraîné pour classer le degré d'humectation foliaire en fonction de la valeur d'intensité lumineuse, une valeur de référence étant là une valeur utilisée lors de l'entraînement du réseau de neurone.

La détermination de l'état d'humectation foliaire pour une pluralité de positions visées peut également être exploitée de façon globale pour une portion de l'espace cultivé dans laquelle sont distribuées ces positions visées. En classant chaque position visée en fonction d'états d'humectation, il est possible de mettre en œuvre une analyse en fréquence de ces états d'humectation, afin d'en déterminer un état d'humectation global, en comparant à une fréquence de référence la fréquence de survenue de valeurs d'intensité lumineuse correspondant à la présence des gouttes. La fréquence peut être spatiale, mais peut également être temporelle, en particulier lorsque l'acquisition et le balayage des positions visées est effectué de manière continue. Par exemple, un organe réfléchissant sur lequel est incident le faisceau d'illumination 8, notamment laser, peut déplacer le champ d'éclairage pour balayer une portion de l'espace cultivé, par exemple le champ d'acquisition. Dans ce cas, l'organe réfléchissant déplace l'axe optique d'éclairage 6 et l'axe optique de capture 14 pendant une durée d'acquisition. Il peut toutefois être considéré que cette durée d'acquisition regroupe des instants d'acquisition correspondant chacun à la position visée à cet instant d'acquisition. Le capteur d'intensité lumineuse 10, par exemple une photodiode, détermine un signal d'intensité lumineuse variant temporellement en fonction du déplacement du champ d'éclairage selon la présence ou non d'eau aux positions balayées. En analysant la fréquence des valeurs d'intensité lumineuse du signal lumineux correspondant à la présence d'eau, il est possible d'en déduire une estimation de l'humectation.

Puisque pour une même position visée des valeurs d'intensité lumineuse sont disponibles pour différents instants d'acquisition, il est possible d'en déduire une évolution d'humectation foliaire (étape S06) au cours de la durée d'observation. Il est alors possible de déterminer quand les feuilles 22 deviennent mouillées et quand elles deviennent sèches, et donc combien de temps les feuilles 22 restent mouillées, qui est le principal facteur permettant aux spores des maladies fongiques de germer sur les feuilles et les contaminer. Il est alors possible de déterminer, pour chaque position visée, le risque fongique, et par conséquent il est possible de planifier et d'effectuer une éventuelle intervention, par exemple l'application d'un traitement phytosanitaire, si le besoin s'en fait sentir.

En disposant de plusieurs positions visées réparties dans l'espace cultivé, une répartition spatiale de l'humectation foliaire peut être déterminée, permettant ainsi d'établir une carte de cette évolution de l'humectation foliaire, et donc du risque fongique, ce qui permet de n'intervenir que dans les zones qui nécessitent une telle intervention.

L'invention n'est pas limitée aux modes de réalisation décrits et représentés aux figures annexées. Des modifications restent possibles, notamment du point de vue de la constitution des diverses caractéristiques techniques ou par substitution d'équivalents techniques, sans sortir pour autant du domaine de protection de l'invention.

## Revendications

1. Procédé de détermination d'une évolution d'humectation foliaire d'une pluralité de plantes d'un espace cultivé, en utilisant un système de détection (1) comprenant :
- une source lumineuse (2) avec un champ d'éclairage (4) selon un axe optique d'éclairage (6),
- un capteur d'intensité lumineuse (10) avec un champ d'acquisition (12) selon un axe optique de capture (14), le capteur d'intensité lumineuse (10) étant configuré pour recevoir un rayonnement lumineux (16) et pour en déterminer un signal d'intensité lumineuse,
- une unité de traitement de données (20) configurée pour recevoir le signal d'intensité lumineuse et déterminer un état d'humectation foliaire,
comprenant l'étape selon laquelle :
a) à chacun d'une pluralité d'instants d'acquisition, lesdits instants d'acquisition couvrant une durée d'observation d'au moins 4h avec des intervalles entre les instants d'acquisition inférieurs à 1h :
a1) émission (S01) d'un faisceau lumineux (8) par la source lumineuse (2) vers une position de l'espace cultivé dans son champ d'éclairage (4),
a2) réception (S02) par le capteur d'intensité lumineuse (10) d'un rayonnement lumineux (16) renvoyé depuis la position de l'espace cultivé, et détermination d'un signal d'intensité lumineuse (S03) à partir du rayonnement lumineux (16) renvoyé, le signal d'intensité lumineuse étant fonction de la quantité de lumière du faisceau lumineux (8) renvoyé depuis la position de l'espace cultivé,
**caractérisé par** les étapes suivantes :
b) pour chaque signal d'intensité lumineuse d'une pluralité de signaux d'intensité lumineuse d'instants d'acquisition différents pour une même position de l'espace cultivé, détermination d'une valeur d'intensité lumineuse (S05) pour la position de l'espace cultivé à partir du signal d'intensité lumineuse, la valeur d'intensité lumineuse étant représentative de l'intensité lumineuse du rayonnement lumineux (16) renvoyé depuis la position de l'espace cultivé ;
c) détermination d'une évolution d'humectation foliaire (S06) pour la position de l'espace cultivé au cours de la durée d'observation à partir de valeurs d'intensité lumineuse à des instants d'acquisition pour la position de l'espace cultivé, en comparant lesdites valeurs d'intensité lumineuse à au moins une valeur de référence correspondant à l'intensité lumineuse qui serait renvoyée par des feuilles (22) sèches à la position visée de l'espace cultivé lorsque lesdites feuilles (22) sont illuminées par le faisceau lumineux (8), résultant en une estimation de l'état d'humectation foliaire pour la position visée à l'instant d'acquisition.

2. Procédé selon la revendication 1, dans lequel les plantes ont des feuilles (22) hydrophobes, et des feuilles (22) hydrophobes sont considérées mouillées lorsque la valeur d'intensité lumineuse est supérieure à une valeur de référence, sinon les feuilles (22) hydrophobes sont considérées comme sèches.

3. Procédé selon l'une quelconque des revendications précédentes, dans lequel les plantes ont des feuilles hydrophiles, et des feuilles hydrophiles et leur taux d'humectation est estimé en comparant l'évolution de l'intensité lumineuse avec une trajectoire ou courbe de référence.

4. Procédé selon l'une quelconque des revendications précédentes, dans lequel une répartition spatiale de l'humectation foliaire est déterminée, pour une pluralité de positions réparties dans l'espace cultivé.

5. Procédé selon l'une quelconque des revendications précédentes, dans lequel la source lumineuse (2) et le capteur d'intensité lumineuse (10) font partie d'un système optique (30) configuré pour déplacer le champ d'éclairage (4) et le champ d'acquisition (12), et l'étape a) est répétée pour une pluralité de positions différentes de l'espace cultivé dans son champ d'éclairage (4), le champ d'éclairage (4) et le champ d'acquisition (12) étant déplacés pour chaque position différente de l'espace cultivé.

6. Procédé selon l'une quelconque des revendications précédentes, dans lequel la source lumineuse (2) et le capteur d'intensité lumineuse (10) font partie d'un système optique (30) comprenant au moins un organe réfléchissant sur un chemin optique du faisceau lumineux (8) émis par la source lumineuse (2) et sur un chemin optique du rayonnement lumineux (16) renvoyé depuis la position de l'espace cultivé et reçu par le capteur d'intensité lumineuse (10).

7. Procédé selon la revendication précédente, dans lequel l'organe réfléchissant est mobile et configuré pour déplacer l'axe optique d'éclairage (6) et l'axe optique de capture (14) pendant une durée d'acquisition ou entre deux instants d'acquisition.

8. Procédé selon l'une quelconque des revendications précédentes, dans lequel le capteur d'intensité lumineuse (10) est un capteur d'image, et le signal d'intensité lumineuse est une image bidimensionnelle du champ d'acquisition (12).

9. Procédé selon l'une quelconque des revendications précédentes, dans lequel la source lumineuse (2) est configurée pour émettre un faisceau lumineux (8) polarisé et le système de détection comprend un séparateur configuré pour séparer le rayonnement lumineux (16) renvoyé en fonction de la polarisation.

10. Procédé selon la revendication précédente, dans lequel un premier signal d'intensité lumineuse est obtenu pour une première polarisation, et un second signal d'intensité lumineuse est obtenu pour une seconde polarisation.

11. Procédé selon l'une quelconque des revendications précédentes, dans lequel la source lumineuse (2) est configurée pour émettre un faisceau lumineux (8) comprenant plusieurs longueurs d'onde distinctes, et le système de détection comprend un séparateur configuré pour séparer le rayonnement lumineux (16) renvoyé en fonction des longueurs d'onde, et dans lequel un premier signal d'intensité lumineuse est obtenu pour une première plage de longueur d'onde, et un second signal d'intensité lumineuse est obtenu pour une seconde plage de longueur d'onde.

12. Procédé selon l'une quelconque des revendications précédentes, dans lequel le système de détection comprend un capteur de distance (9) configuré pour déterminer une distance entre ledit système et la position de l'espace cultivé.

13. Système de détection d'humidité foliaire comprenant :
- une source lumineuse (2) avec un champ d'éclairage (4) selon un axe optique d'éclairage (6),
- un capteur d'intensité lumineuse (10) avec un champ d'acquisition (12) selon un axe optique de capture (14), le capteur d'intensité lumineuse (10) étant configuré pour recevoir un rayonnement lumineux (16) et pour en déterminer un signal d'intensité lumineuse,
- une unité de traitement de données configurée pour recevoir le signal d'intensité lumineuse et déterminer un état d'humectation foliaire,
le système étant configuré pour mettre en œuvre le procédé selon l'une quelconque des revendications précédentes.

## Patentansprüche

1. Verfahren zum Bestimmen einer Blattbenetzungsentwicklung einer Vielzahl von Pflanzen einer Anbaufläche unter Verwendung eines Detektionssystems (1), das Folgendes umfasst:
- eine Lichtquelle (2) mit einem Beleuchtungsfeld (4) entlang einer optischen Beleuchtungsachse (6),
- einen Lichtstärkesensor (10) mit einem Erfassungsfeld (12) entlang einer optischen Aufnahmeachse (14), wobei der Lichtstärkesensor (10) dazu konfiguriert ist, eine Lichtstrahlung (16) zu empfangen und ein Lichtstärkesignal zu bestimmen,
- eine Datenverarbeitungseinheit (20), die dazu konfiguriert ist, das Lichtstärkesignal zu empfangen und einen Blattbenetzungszustand zu bestimmen,
umfassend folgenden Schritt:
a) zu jedem von einer Vielzahl von Erfassungszeitpunkten, wobei die Erfassungszeitpunkte eine Beobachtungsdauer von mindestens 4 Stunden abdecken, wobei Intervalle zwischen den Erfassungszeitpunkten kürzer als 1 Stunde sind:
a1) Emittieren (S01) eines Lichtstrahls (8) durch die Lichtquelle (2) auf eine Position der Anbaufläche in seinem Beleuchtungsfeld (4),
a2) Empfangen (S02), durch den Lichtstärkesensor (10), einer Lichtstrahlung (16), die von der Position der Anbaufläche zurückgestrahlt wird, und Bestimmen eines Lichtstärkesignals (S03) aus der zurückgestrahlten Lichtstrahlung (16), wobei das Lichtstärkesignal von der Lichtmenge des Lichtstrahls (8), der von der Position der Anbaufläche zurückgestrahlt wird, abhängig ist,
**gekennzeichnet durch** folgende Schritte:
b) für jedes Lichtstärkesignal einer Vielzahl von Lichtstärkesignalen verschiedener Erfassungszeitpunkte für eine gleiche Position der Anbaufläche, Bestimmen eines Lichtstärkewertes (S05) für die Position der Anbaufläche aus dem Lichtstärkesignal, wobei der Lichtstärkewert die Lichtstärke der Lichtstrahlung (16) darstellt, die von der Position der Anbaufläche aus zurückgestrahlt wird;
c) Bestimmen einer Blattbenetzungsentwicklung (S06) für die Position der Anbaufläche während der Beobachtungsdauer ausgehend von Lichtstärkewerten zu Erfassungszeitpunkten für die Position der Anbaufläche, indem die Lichtstärkewerte mit mindestens einem Referenzwert verglichen werden, welcher der Lichtstärke entspricht, die von trockenen Blättern (22) an der anvisierten Position der Anbaufläche zurückgestrahlt würde, wenn die Blätter (22) von dem Lichtstrahl (8) beleuchtet werden, woraus sich eine Schätzung des Blattbenetzungszustands für die Position ergibt, die zu dem Erfassungszeitpunkt anvisiert wird.

2. Verfahren nach Anspruch 1, wobei die Pflanzen hydrophobe Blätter (22) aufweisen, und hydrophobe Blätter (22) als feucht angesehen werden, wenn der Lichtstärkewert größer als ein Referenzwert ist, wobei die hydrophoben Blätter (22) ansonsten als trocken angesehen werden.

3. Verfahren nach einem der vorhergehenden Ansprüche, wobei die Pflanzen hydrophile Blätter aufweisen, und die Benetzungsrate der hydrophilen Blätter geschätzt wird, indem die Entwicklung der Lichtstärke mit einer Referenztrajektorie oder einem Referenzverlauf verglichen wird.

4. Verfahren nach einem der vorhergehenden Ansprüche, wobei eine räumliche Verteilung der Blattbenetzung für eine Vielzahl von Positionen, die auf der Anbaufläche verteilt sind, bestimmt wird.

5. Verfahren nach einem der vorhergehenden Ansprüche, wobei die Lichtquelle (2) und der Lichtstärkesensor (10) Teil eines optischen Systems (30) sind, das dazu konfiguriert ist, das Beleuchtungsfeld (4) und das Erfassungsfeld (12) zu verschieben, und der Schritt a) für eine Vielzahl von verschiedenen Positionen der Anbaufläche in seinem Beleuchtungsfeld (4) wiederholt wird, wobei das Beleuchtungsfeld (4) und das Erfassungsfeld (12) für jede verschiedene Position der Anbaufläche verschoben werden.

6. Verfahren nach einem der vorhergehenden Ansprüche, wobei die Lichtquelle (2) und der Lichtstärkesensor (10) Teil eines optischen Systems (30) sind, das mindestens ein reflektierendes Organ auf einem Lichtweg des Lichtstrahls (8), der von der Lichtquelle (2) emittiert wird, und auf einem Lichtweg der Lichtstrahlung (16), die von der Position der Anbaufläche aus zurückgestrahlt wird und von dem Lichtstärkesensor (10) empfangen wird, umfasst.

7. Verfahren nach dem vorhergehenden Anspruch, wobei das reflektierende Organ beweglich ist und dazu konfiguriert ist, die optische Beleuchtungsachse (6) und die optische Aufnahmeachse (14) während einer Erfassungsdauer oder zwischen zwei Erfassungszeitpunkten zu verschieben.

8. Verfahren nach einem der vorhergehenden Ansprüche, wobei der Lichtstärkesensor (10) ein Bildsensor ist, und das Lichtstärkesignal ein zweidimensionales Bild des Erfassungsfeldes (12) ist.

9. Verfahren nach einem der vorhergehenden Ansprüche, wobei die Lichtquelle (2) dazu konfiguriert ist, einen polarisierten Lichtstrahl (8) zu emittieren, und das Detektionssystem einen Teiler umfasst, der dazu konfiguriert ist, die Lichtstrahlung (16) zu teilen, die in Abhängigkeit von der Polarisation zurückgestrahlt wird.

10. Verfahren nach dem vorhergehenden Anspruch, wobei ein erstes Lichtstärkesignal für eine erste Polarisation erzielt wird, und ein zweites Lichtstärkesignal für eine zweite Polarisation erzielt wird.

11. Verfahren nach einem der vorhergehenden Ansprüche, wobei die Lichtquelle (2) dazu konfiguriert wird, einen Lichtstrahl (8) zu emittieren, der mehrere getrennte Wellenlängen umfasst, und das Detektionssystem einen Teiler umfasst, der dazu konfiguriert ist, die Lichtstrahlung (16) zu teilen, die in Abhängigkeit von den Wellenlängen zurückgestrahlt wird, und wobei ein erstes Lichtstärkesignal für einen ersten Wellenlängenbereich erzielt wird und ein zweites Lichtstärkensignal für einen zweiten Wellenlängenbereich erzielt wird.

12. Verfahren nach einem der vorhergehenden Ansprüche, wobei das Detektionssystem einen Entfernungssensor (9) umfasst, der dazu konfiguriert ist, eine Entfernung zwischen dem System und der Position der Anbaufläche zu bestimmen.

13. System zum Detektieren einer Blattbenetzung, umfassend:
- eine Lichtquelle (2) mit einem Beleuchtungsfeld (4) entlang einer optischen Beleuchtungsachse (6),
- einen Lichtstärkesensor (10) mit einem Erfassungsfeld (12) entlang einer optischen Aufnahmeachse (14), wobei der Lichtstärkesensor (10) dazu konfiguriert ist, eine Lichtstrahlung (16) zu empfangen und daraus ein Lichtstärkesignal zu bestimmen,
- eine Datenverarbeitungseinheit, die dazu konfiguriert ist, das Lichtstärkesignal zu empfangen und einen Blattbenetzungszustand zu bestimmen,
wobei das System dazu konfiguriert ist, das Verfahren nach einem der vorhergehenden Ansprüche umzusetzen.

## Claims

1. A method for determining changes in leaf moisture levels of a plurality of plants in a cultivated area, using a detection system (1) comprising:
- a light source (2) with an illumination field (4) along an optical illumination axis (6),
- a light intensity sensor (10) with a detection field (12) along a detection optical axis (14), the light intensity sensor (10) being configured to receive light radiation (16) and to determine a light intensity signal therefrom,
- a data processing unit (20) configured to receive the light intensity signal and determine a leaf wetness state,
comprising the step of:
a) at each of a plurality of acquisition times, said acquisition times covering an observation period of at least 4 hours with intervals between acquisition times of less than 1 hour :
a1) emission (S01) of a light beam (8) by the light source (2) towards a position in the cultivated area within its illumination field (4),
a2) the light intensity sensor (10) receiving (S02) light radiation (16) reflected from the position of the cultivated area, and determining a light intensity signal (S03) from the reflected light radiation (16), the light intensity signal being a function of the amount of light of the light beam (8) reflected from the position of the cultivated area,
**characterised by** the following steps:
b) for each light intensity signal from a plurality of light intensity signals at different acquisition times for the same position in the cultivated area, determining a light intensity value (S05) for the position in the cultivated area from the light intensity signal, the light intensity value being representative of the light intensity of the light radiation (16) reflected from the position of the cultivated area ;
c) determining a trend in leaf moisture (S06) for the position of the cultivated area over the observation period based on light intensity values at acquisition times for the position of the cultivated area, by comparing said light intensity values with at least a reference value corresponding to the light intensity that would be reflected by dry leaves (22) at the target position of the cultivated area when said leaves (22) are illuminated by the light beam (8), resulting in an estimate of the leaf moisture status for the target position at the time of acquisition.

2. A method according to claim 1, wherein the plants have hydrophobic leaves (22), and the hydrophobic leaves (22) are considered wet when the light intensity value exceeds a reference value, otherwise, the hydrophobic leaves (22) are considered dry.

3. A method according to any of the preceding claims, wherein the plants have hydrophilic leaves, and the hydrophilic leaves and their wetting rate are estimated by comparing the change in light intensity with a reference trajectory or curve.

4. A method according to any of the preceding claims, wherein a spatial distribution of leaf wetting is determined for a plurality of positions distributed throughout the cultivated area.

5. A method according to any of the preceding claims, wherein the light source (2) and the light intensity sensor (10) form part of an optical system (30) configured to move the illumination field (4) and the acquisition field (12), and step a) is repeated for a plurality of different positions of the cultivated area within its illumination field (4), the illumination field (4) and the acquisition field (12) being moved for each different position of the cultivated area.

6. A method according to any of the preceding claims, wherein the light source (2) and the light intensity sensor (10) form part of an optical system (30) comprising at least one reflecting element in an optical path of the light beam (8) emitted by the light source (2) and in the optical path of the light radiation (16) reflected from the cultivated area and received by the light intensity sensor (10).

7. A method according to the preceding claim, wherein the reflecting member is movable and configured to shift the illumination optical axis (6) and the capture optical axis (14) during an acquisition period or between two acquisition instants.

8. A method according to any of the preceding claims, in which the light intensity sensor (10) is an image sensor, and the light intensity signal is a two-dimensional image of the acquisition field (12).

9. A method according to any of the preceding claims, wherein the light source (2) is configured to emit a polarised light beam (8) and the detection system comprises a splitter configured to separate the returned light radiation (16) according to its polarisation.

10. A method according to the preceding claim, wherein a first light intensity signal is obtained for a first polarisation, and a second light intensity signal is obtained for a second polarisation.

11. A method according to any of the preceding claims, wherein the light source (2) is configured to emit a light beam (8) comprising a plurality of distinct wavelengths, and the detection system comprises a splitter configured to split the returned light radiation (16) according to wavelength, and wherein a first light intensity signal is obtained for a first wavelength range, and a second light intensity signal is obtained for a second wavelength range.

12. A method according to any of the preceding claims, wherein the detection system comprises a distance sensor (9) configured to determine a distance between said system and the position of the cultivated area.

13. A leaf moisture detection system comprising:
- a light source (2) with an illumination field (4) along an optical illumination axis (6),
- a light intensity sensor (10) with a detection field (12) along a detection optical axis (14), the light intensity sensor (10) being configured to receive light radiation (16) and to determine a light intensity signal therefrom,
- a data processing unit configured to receive the light intensity signal and determine a leaf wetness state,
the system being configured to implement the method according to any one of the preceding claims.
